# EUROPÄISCHE PATENTSCHRIFT

(11) **EP 2 635 493 B1**
(45) Veröffentlichungstag und Bekanntmachung des Hinweises auf die Patenterteilung: **17.09.2014**
(21) Anmeldenummer: 11779386.9
(22) Anmeldetag: 02.11.2011
(51) Int. Cl.: B65B 3/00, B65B 3/12, B65B 3/32, B65B 43/59

(54) **VORRICHTUNG UND VERFAHREN ZUR MEHRFACHABFÜLLUNG HOCHVISKOSER MATERIALIEN**
APPARATUS AND METHOD FOR THE MULTIPLE FILLING OF HIGHLY VISCOUS MATERIALS
APPAREIL ET PROCÉDÉ POUR LE REMPLISSAGE MULTIPLE DE MATÉRIAUX À HAUTE VISCOSITÉ

(30) Priorität: 02.11.2010 DE 102010060308
(43) Veröffentlichungstag der Anmeldung: 11.09.2013
(73) Patentinhaber: Transcodent GmbH & Co. KG, 24149 Kiel (DE)
(72) Erfinder: SPREIZER, Heinrich, CH-8272 Ermatingen (CH)
(74) Vertreter: Lermer, Christoph
(86) Internationale Anmeldenummer: PCT/EP2011/069216
(87) Internationale Veröffentlichungsnummer: WO 2012/059504

(56) Entgegenhaltungen:
- EP-A1- 0 545 483
- EP-A1- 1 193 178
- US-A- 4 388 795
- US-A- 5 127 449
- US-A1- 2009 014 088

## Beschreibung

### TECHNISCHES GEBIET

Die Anmeldung betrifft eine Vorrichtung und ein Verfahren zum Abfüllen eines insbesondere hochviskosen Materials in Abfüllbehälter. Die Vorrichtung umfasst ein erstes Bauteil umfassend einen Materialbehälter mit wenigstens einer Ausbringdüse; und ein zweites Bauteil umfassend wenigstens einen Träger zur Aufnahme der Abfüllbehälter.

### STAND DER TECHNIK

Abfüllen ist eine Sonderform der chargenweisen Rezeplurdosierung mit nur einer einzigen Komponente. Abfüllvorgänge erfolgen stets chargenweise, also in Zyklen bzw. mit mehrfacher Taktzahl. Bei der Abfülltechnik tritt der eigentliche Dosiervorgang in den Hintergrund.

Gegenüber dem Dosieren im Bereich der Produkterzeugung zeigt das Abfüllen die Besonderheit, dass für den Bereich der quantitativen Abgrenzung der Abfüllmasse bestimmte Toleranzen eingehalten werden müssen. Außerdem gelten gesetzliche Vorschriften, insbesondere das Eichgesetz sowie die dazugehörige Eichordnung, die die Einhaltung von Toleranzen vorgeben. Diese Toleranzen sind insbesondere beim Abfüllen hochviskoser Materialien, wie in der Dentaltechnik verwendeter Füllstoffe, nicht oder nur mit hohem Aufwand einhaltbar.

Die Durchschrift US 4,388,795 offenbart eine Vorrichtung und ein Verfahren, beideren aus einem stationären Bauteil eine viskose Masse in einen Behältergefüllt wird.

### AUFGABE DER ERFINDUNG

Es ist deshalb eine Aufgabe der Erfindung, eine Vorrichtung und ein Verfahren anzugeben, die es erlauben, auch hochviskose Materialien mit hoher Genauigkeit bzgl. quantitativer Vorgaben (Abfüllmengen) abzufüllen.

### TECHNISCHE LÖSUNG

Die oben genannte Aufgabe wird durch eine Vorrichtung gemäß dem Anspruch 1 und ein Verfahren gemäß dem Anspruch 6 gelöst. Vorteilhafte Ausführungen und Weiterbildungen ergeben sich aus den Merkmalen der abhängigen Ansprüche.

Eine erfindungsgemäße Vorrichtung zum Abfüllen eines insbesondere hochviskosen Materials in Abfüllbehälter umfasst: ein erstes Bauteil umfassend einen Materialbehälter mit wenigstens einer Ausbringdüse; ein zweites Bauteil umfassend wenigstens einen Träger zur Aufnahme der Abfüllbehälter, wobei der Träger durch den während des Abfüllens vom Material erzeugten Staudruck relativ zum ersten Bauteil bewegbar angeordnet ist; und Mittel zum Ausüben einer definierten Gegenkraft zur durch den Staudruck verursachten Bewegung des Trägers.

Die Mittel zum Ausüben der Gegenkraft umfassen wenigstens eine Steuerung zur Steuerung der Gegenkraft in Abhängigkeit von wenigstens einem Parameter. Der Parameter wird während des Befüllvorgang bestimmt bzw. erfasst oder gemessen.

Die Dosiervorrichtung besteht im Wesentlichen aus einem ersten Bauteil und einem zweiten Bauteil, das einen Träger aufweist, der relativ zum ersten Bauteil bewegbar angeordnet ist.

Das erste Bauteil umfasst einen Dosierzylinder (Materialbehälter) mit Seitenwänden und einem Kolbenboden. Im Dosierzylinder ist abzufüllendes Material (z. B. ein Composit für den Einsatz in der Dentaltechnik, Dentalmaterialien) eingefüllt. Im Zylinderboden sind Fließdüsen (Ausfluss- bzw. Abfülldüsen) zum Ausfluss des abzufüllenden Materials aus dem Zylinder angeordnet. Ein Kolben bzw. Pressstößel presst das im Dosierzylinder befindliche Material durch Kraftausübung zu den Ausfließ- bzw. Abfülldüsen hin aus den Fließdüsen hinaus.

Das zweite Bauteil weist eine Palette und/oder einen Werkstückträger auf. Am Werkstückträger ist ein relativ zum Werkstückträger bewegbarer Träger (Tablett, Tisch) zur Aufnahme für insbesondere mehrere Abfüllbehälter (z. B. Kapseln) angeordnet. Die Aufnahmeplätze für die Kapseln sind nebeneinander, in einer oder möglicherweise in mehreren Reihen, benachbart zueinander am Träger vorgesehen. Der Träger kann beispielsweise über vorzugsweise zwei oder mehrere Linearführungen relativ zur Palette bzw. zum Werkstückträger bewegbar mit dieser/diesem verbunden sein.

Durch den Staudruck, der beim Ausfließen des Materials aus den Fließdüsen in den Abfüllbehältern erzeugt und auf den Träger übertragen wird, entsteht eine Kraft, die den Träger von den Düsen weg in Richtung der Palette bzw, des Werkstückträgers bewegt. Das zweite Bauteil weist Mittel auf, die eine Gegenkraft gegen diese Kraft ausüben, die jedoch kleiner ist als die durch den Staudruck ausgeübte Kraft, sodass der Träger mit den Abfüllbehältern während des Abfüllvorgangs von den Düsen weg bewegt wird, wobei er durch die Linearführung(en) geführt wird.

Die Palette bzw. der Werkstückträger kann beispielsweise über einen NC-Hubtisch mit einer bewegbaren NC-Achse verbunden sein. Durch die Bewegung der NC-Achse kann eine Relativbewegung der Palette bzw. des Werkstückträgers gegenüber dem ersten Bauteil erzeugt werden. Auf diese Wiese kann eine die Bewegung des Trägers gegenüber der Palette bzw. dem Werkstückträger überlagernde Bewegung erzeugt werden, die sich ebenfalls auf den Träger überträgt. Auf diese Weise können auch größere Füllhöhen realisiert, d. h. Kapseln mit größerer Höhe befüllt werden, wenn die maximale Strecke, die der Träger gegenüber der Palette bzw. dem Werkstückträger bewegt werden kann, kleiner ist als die Füllhöhe bzw. die Höhe der Kapseln. Bei längeren Abfüllhüben kann somit die NC-Achse einen Weganteil übernehmen. Der Prozess an sich wird nicht wesentlich komplexer.

Beispielsweise kann bauartbedingt der maximale pneumatisch geregelte Weg s sein, der zum Befüllen kleinerer Kapseln ausreicht. Beim Befüllen größerer Kapseln oder Spritzen wird ein längerer Füllweg benötigt. Dieser Weg kann als Summe aus einem Weg x der NC-Achse und dem Weg s der Proportionalpneumatik zusammengesetzt sein. Erreicht beispielsweise die Proportionalpneumatik einen Grenzwert, fährt die NC-Achse um den Betrag Δx zurück. Die Gegenkraft der Proportionalpneumatik ist wegabhängig frei einstellbar.

Die Füllhöhe entspricht dem gesamten Bewegungsweg des Trägers bzw. der Abfüllbehälter und/oder des zweiten Bauteils. Der Träger entfernt sich während des Abfüllvorgangs unter dem Staudruck vom ersten Bauteil. Durch die Gegenkraft wird er "abgebremst". Die Geschwindigkeit der Bewegung des Trägers wird durch den Staudruck (der vom Fließverhalten des Materials abhängt) und die Gegenkraft bestimmt.

Vorzugsweise umfasst die Vorrichtung zwei oder mehrere Ausbringdüsen. Beispielsweise im Dentalbereich werden große Mengen hochviskoser Materialien in Kapseln abgefüllt. Die durchschnittliche Füllmasse liegt in der Regel zwischen 200mg - 350mg. Um hohe Stückzahlen wirtschaftlich zu befüllen, ist die Mehrfachabfüllung vorteilhaft. Das Ausbringen erfolgt dabei parallel durch mehrere Düsen in mehrere Abfüllbehälter. Es handelt sich somit um eine Mehrfachabfüllung, die in einer Reihe aufeinander folgender Zyklen wiederholt wird, sobald eine Charge an Abfüllbehältern befüllt ist. Der Träger kann nach dem Abfüllvorgang mit neuen (leeren) Abfüllbehältern bestückt oder durch einen Träger mit unbefüllten Abfüllbehältern ausgetauscht werden. Für den neuen Abfüllvorgang (Zyklus) wird der Träger wieder in eine Ausgangsposition nahe der Ausbringdüse(n) herangefahren. Für die Dosierung bzw. das Abfüllen ist es unerheblich, wie viele Kapseln gleichzeitig befüllt werden.

Vorzugsweise umfassen die Mittel eine Vorrichtung zur Messung des vom Träger vom Beginn des Abfüllzyklus, d. h. von der Ausgangsposition aus, zurückgelegten Wegs. Die maximale Weglänge (Befüllweg) des Abfüllbehälters/der Abfüllbehälter bzw. des Trägers relativ zum ersten Bauteil ist vorgegeben. Damit ist das Befüllvolumen (Weg mal Querschnittsfläche des Abfüllbehälters) vorgegeben und steht bei allen Befüllzyklen fest.

Die Gegenkraft kann z. B. durch eine Feder ausgeübt werden, die der Bewegungsrichtung des zweiten Bauteils entgegen wirkt. Dies hat jedoch den Nachteil, dass die Gegenkraft während des Befüllvorgangs nicht variiert werden kann. Daher können die Mittel vorzugsweise zur Erzeugung einer über den Abfüllweg variablen Gegenkraft ausgebildet sein. So kann eine Proportionalpneumatik zur Einstellung der Gegenkraft vorgesehen sein. So kann die Gegenkraft während des Befüllvorgangs variiert werden, z. B. wegabhängig. Die variable Gegenkraft kann jedoch durch alle möglichen anderen geeigneten Mittel erzeugt werden. Die Gegenkraft kann so gesteuert/geregelt werden, dass die Gegenkraft stets gemäß einer wegabhängigen Funktion erzeugt wird.

Die Vorrichtung kann eine Regelung aufweisen, die den Ausbringdruck im Materialbehälter in Abhängigkeit von der Befüllzeit der Abfüllbehälter regelt. Dies bedeutet, dass zwischen zwei Abfüllzyklen, wenn die Befüllzeit nicht einem Sollwert entspricht oder nicht in einem Sollbereich liegt, der Ausbringdruck im Materialbehälter verändert wird, um die Befüllzeit zum Sollwert bzw. in den Sollbereich zurückzuführen. Es können jedoch auch andere Parameter der Anlage geregelt werden, die das Fließverhalten des Materials beeinflussen, um die Regelung durchzuführen. So kann z. B. die Temperatur des Materials im Materialbehälter und/oder in den Düsen verändert werden.

In einer weiteren Ausführungsform kann die Gegenkraft bzw. die Charakteristik der Gegenkraft während des Befüllens geregelt werden.

Ein erfindungsgemäßes Verfahren zum Abfüllen eines insbesondere hochviskosen Materials in Abfüllbehälter umfasst die Schritte:
a) Ausüben eines Ausbringdrucks zum Ausbringen des Materials aus einem Materialbehälter in Abfüllbehälter;
b) Bewegen der Abfüllbehälteir durch den vom in die Abtüllbehälter einfließenden Material erzeugten Staudruck.

Die Abfüllbehälter bzw. der Träger, in dem die Abflillbehälter benachbart zueinander angeordnet sind, bewegt sich unter dem Einfluss des Staudrucks von den Düsen weg. Die Gegenkraft im Schritt b) wird in Abhängigkeit von einem Messparameter gesteuert bzw. geregelt.

Im Schritt b) wird eine definierte Gegenkraft gegen die Bewegung der Abfüllbehälter, die durch den Staudruck bei der Befüllung der Abfüllbehälter entsteht, ausgeübt.

Durch die Erfindung wird ein luftfreies Abfüllen gegen einen kontrollierten und geregelten Staudruck durchgeführt. Der Staudruck kann während des Abfüllvorgangs variieren. Die Rückhaltkräfte und Wege werden beispielsweise mittels der elektronisch gesteuerten/ geregelten Proportionalpneumatik ("Luftfedern") mit Kraft-/ Wegesteuerung bzw. -regelung erzeugt.

Es kann einer oder es können mehrere Abrüllbehälter vorgesehen sein. Das Material kann vorzugsweise durch mehrere Ausbringdüsen parallel ausgebracht werden. Es findet eine Mehrfachbefüllung mit hohem Durchsatz in einer Vielzahl aufeinander folgender Befüllungszyklen statt, zwischen denen jeweils volle mit lecren Abfüllbehältern ersetzt werden.

Die Gegenkraft wird im Schritt b) insbesondere in Abhängigkeit vom während des Abfüllvorgangs von den Abfüllbehältern zurückgelegten Weg gesteuert bzw. geregelt. Durch die wegabhängige Steuerung/Regelung erfolgt die Abfüllung angepasst an das Fließverhalten des Materials.

Insbesondere wird der während des Abfüllvorgangs von den Abfüllbehältern zurückgelegte maximale Weg vorgegeben. Der vorgegebene Weg entspricht dem geforderten Gewicht. Damit ist das Befüllvolumen so bestimmt, dass die Abfüllbehälter auch in Mehrfachabfüllung (also paralleler Abfüllung) mit hoher Genauigkeit befüllt werden. Dies erlaubt es, strengen Vorgaben hinsichtlich der Füllgenauigkeit zu entsprechen. Im Stand der Technik wurden Verfahren ohne Volumenbestimmung verwendet. Dadurch sind zwar die Maschinen sehr einfach und preiswert aufgebaut. Die Qualität der Abfüllung ist jedoch stark abhängig vom Können und Routine der Bedienpersonen. Schon bei leichten Schwankungen der Fliessgeschwindigkeiten sinkt die Qualität der Abfüllung rapide. Die Folgen sind Unterdosierungen mit Lufteinschlüssen oder Überdosierungen und Kontamination der Kapseln. Neben erheblichem Materialverlusten und Verzögerungen in der Produktion sind die Fehler für jeden Anwender sichtbar und in der Anwendung störend. Bei der vorliegenden Erfindung ist dagegen eine Automatisierung des Abfüllens möglich. Es handelt sich bei der Erfindung um ein tatsächliches volumetrisches Dosierverfahren, d. h. ein Verfahren, bei dem durch die Wegmessung eine Volumenbestimmung stattfindet.

Vorzugsweise wird die Geschwindigkeit der Abfüllbehälter während des Abfüllvorgangs durch den Staudruck und die ausgeübte Gegenkraft bestimmt. Im Gegensatz zu herkömmlichen Verfahren passt sich somit die Geschwindigkeit der Abfüllbehälter während des Befüllvorgangs an das Fließverhalten des Materials an.

Insbesondere wird auch die Befüllzeit durch den Staudruck und die während eines Abfüllvorgangs ausgeübte Gegenkraft bestimmt.

Am Anfang des Abfüllvorgangs erfolgt eine kurzzeitige Erhöhung der Gegenkraft, um das einzufüllende Material zunächst in die Kapselöffnung, die sich am unteren Ende der Kapsel befindet (also im Bereich, der zuerst befüllt wird), einzubringen. Diese wird damit für den restlichen Befüllvorgang "verschlossen". Anschließend erfolgt die Befüllphase mit geringerer Gegenkraft.

Am Ende des Abfüllvorgangs (Zyklusende) muss ein viskoplastischer Abriss erfolgen, da Fadenbildung Kontamination verursacht. Daher ist es im Rahmen der Erfindung zweckmäßig, vor dem Abriss die Gegenkraft kurzfristig zu erhöhen. In der Steuerung kann hinterlegt sein, dass die Krafterhöhung an einem bestimmten Punkt des Abfüllwegs erfolgt. Das Composit wird dann bis auf die Höhe der Dosierdüse fest an die Kapselwandung gedrückt. Das Material hat eine hohe Haftung in der Düse und in der Kapsel. Durch schnellen Kraftabbau und Wegfahren des Trägers hat das Material nicht genügend Zeit einzuschnüren und reißt ab. In der Kapsel und in der Düse bilden sich waagerechte viskoplastische Bruchflächen.

Mit diesem Aufbau können verschiedene Abfüllabläufe generiert werden.

In einer besonders bevorzugten Ausführungsform der Erfindung wird der Ausbringdruck in Abhängigkeit von der Befüllzeit der Abfüllbehälter zwischen unterschiedlichen Abfüllzyklen geregelt. Dies bedeutet, dass bei einem Driften des Ausflussverhaltens des Materials aus den Düsen und somit einer Veränderung der Ausflusscharakteristik eine Anpassung vorgenommen werden kann. Das Driften bzw. die Veränderung äußern sich in einer Änderung der Ausbringzeit, die zum Befüllen der Abfüllbehälter gemessen wird. Durch ein nachregeln von Parametern, einzeln oder in Kombination, z. B. des Ausbringdrucks, der auf das Material im Materialbehälter wirkt, kann der Füllvorgang automatisiert geregelt werden, um eine befriedigende Genauigkeit der Füllmenge zu erreichen.

Die Probleme, die sich bei herkömmlichen Methoden aus dem mit der Zeit und nach mehreren Zyklen veränderten (meist beschleunigten) Fließverhalten des Materials ergeben, sind bei der vorliegenden Erfindung ausgeräumt, da die Abfüllwege gemessen werden. Wird nach einer bestimmten Anzahl von Abfüllzyklen eine kritische (meist minimale) Abfüllzeit erreicht, werden andere Parameter so verändert, dass die kritische Dosierzeit nicht über- /unterschritten wird, also eine minimale Dosierzeit beispielsweise nicht unterschritten wird. Diese Regelung kann unabhängig von einem Operator durch entsprechende Maschinensoftware erfolgen. Die Regelparameter und Zusammenhänge sind in einer Matrix im Programm abgelegt.

Die Steuerungen und/oder Regelungen werden durch entsprechende Software implementiert. Diese kann auch selbstlernend bzw. selbstoptimierend sein.

Das System ist insgesamt geeignet für gängige Automatisierungssysteme wie Rundschaltautomaten, flexible Montagesysteme, oder Kombinationen davon. Bevorzugt werden flexible Montagesysteme mit Palettensystemen verwendet. Ein Umrüsten der Maschine kann durch Palettenwechsel erfolgen. Die Paletten können außerhalb der Automatisierung kalibriert werden. Die geometrischen und physikalischen Daten werden auf die Transponder auf den Paletten übertragen. So kann jede Palette im Prozess verfolgt werden. In der Dosierstation werden diese Daten ausgelesen. Die entsprechenden Parameter für die Abfüllung werden aus einer Matrix der Palette zugeordnet. Jedes Produkt hat seine spezifischen Dosierrezepte, jeder Palette können Korrekturdaten zugeordnet werden.

Nach dem Dosiervorgang erfolgt eine Kontrollmessung der Füllhöhe in jeder Kapsel. Diese Daten werden der entsprechenden Palette zugeordnet. Sind einzelne Kapseln nicht korrekt befüllt, werden sie am Prozessende als Ausschuss ausselektiert. Treten Fehler regelmäßig auf und werden diese einer Palette zugeordnet, wird diese aus der Produktion herausgenommen und durch eine neue ersetzt. Treten generelle Fehler auf, wird die Produktion gestoppt, da in diesem Fall offensichtlich der Parametersatz für die Dosierung/ Charge nicht geeignet ist. Es erfolgt eine Überprüfung und eine Neubewertung, bevor Schäden entstehen.

Sämtliche der genannten Merkmale und beschriebenen Effekte können kombiniert werden, unabhängig davon, ob sie im Zusammenhang mit der Vorrichtung oder dem Verfahren erläutert wurden.

### KURZE BESCHREIBUNG DER FIGUREN

Weitere Merkmale und Vorteile der Erfindung werden aus der nachfolgenden Beschreibung bevorzugter Ausführungsbeispiele anhand der Figuren deutlich. Es zeigen:
- Fig. 1: eine Schnittansicht der erfindungsgemäßen Vorrichtung;
- Fig. 2: eine Schnittansicht eines ersten Ausschnitts der erfindungsgemäßen Vorrichtung;
- Fig. 3: eine Schnittansicht eines zweiten Ausschnitts der erfindungsgemäßen Vorrichtung; und
- Fig. 4: eine Schnittansicht einer Vorrichtung zur Erklärung des Ausfließverhaltens.

### AUSFÜHRLICHE BESCHREIBUNG DER FIGUREN

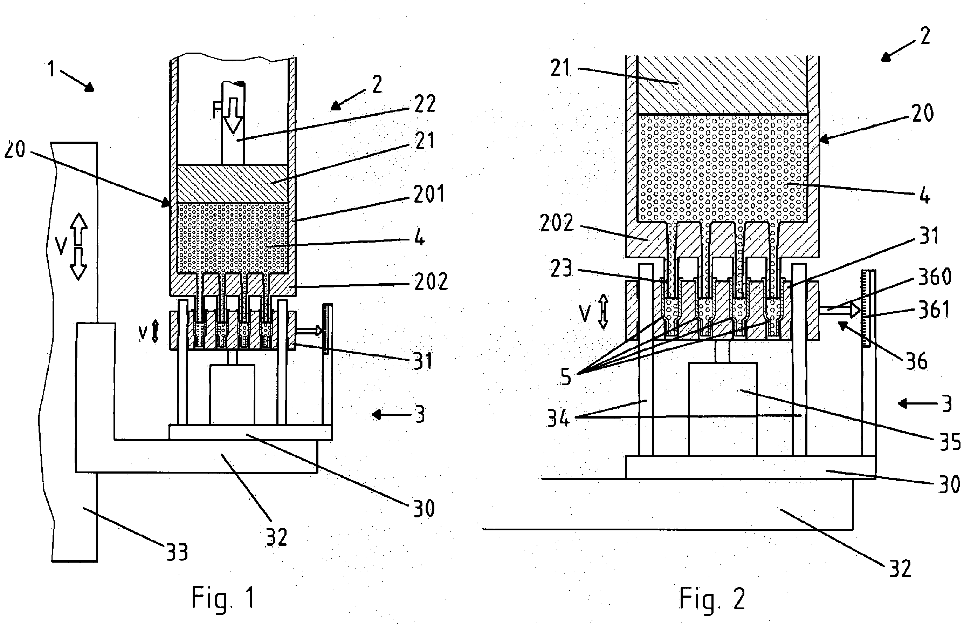

Die Figur 1 zeigt eine erfindungsgemäße Abfüllvorrichtung1. Die Abfüllvorrichtung1 umfasst ein erstes Bauteil 2 und ein zweites Bauteil 3.

Das erste Bauteil 2 umfasst einen Dosierzylinder 20 mit einer Seitenwand 201 und einem Bodenteil 202. Außerdem umfasst das erste Bauteil 2 einen Kolben 21, der über ein Pressstößel 22 mit einer Kraft F, angedeutet durch einen Pfeil, beaufschlagt wird, um in dem im Behälter angeordneten Material (Composit) 4 einen Ausbring- bzw. Dosierdruck zu erzeugen.

Das zweite Bauteil 3 weist eine Palette bzw. einen Werkstückträger 30 und einen Aufnahmeträger 31 auf. Der Aufnahmeträger 31 ist mit dem Werkstückträger 30 bewegbar verbunden, wie durch den Doppelpfeil v angedeutet.

Der Werkstückträger 30 ist über einen NC-Hubtisch 32 mit einer NC-Achse 33 verbunden. Die NC-Achse 33 ist, wie durch den Doppelpfeil V angedeutet, vertikal bewegbar gegenüber dem ersten Bauteil 2 angeordnet. Durch eine Bewegung der NC-Achse 33 kann eine Relativbewegung des Werkzeugträgers 30 gegenüber dem ersten Bauteil 2 erzeugt werden. Auf diese Weise können die Bewegungen der NC-Achse und des Aufnahmeträgers 31 gegenüber dem Werkstückträger 30 überlagert werden. Die Bewegung der NC-Achse 33 überträgt sich ebenfalls auf den Aufnahmeträger 31. Auf diese Weise können größere Füllhöhen realisiert, d.h. es können Kapseln mit größerer Füllhöhe befüllt werden. Ist der maximale Weg der Bewegung v des Aufnahmeträgers 31 gegenüber dem Werkstückträger 30 nicht ausreichend, so kann dieser durch die Bewegung der NC- Achse vergrößert werden.

In der Figur 2 ist ein Ausschnitt aus der Figur 1 dargestellt, in dem die NC-Achse, sowie der Bereicht um den Pressstößel weggelassen wurden. Gleiche Bauteile sind in der Folge mit denselben Bezugszeichen bezeichnet.

Im Bodenteil 202 des ersten Bauteils 2 sind Fließdüsen 23 ausgebildet. Über diese kann Composit 4 in Kapseln 5 abgefüllt werden, wobei die Kapseln 5 in entsprechenden Aufnahmeplätzen des Aufnahmeträgers 31 benachbart zueinander angeordnet sind.

Das zweite Bauteil 3 weist außerdem Linearführungen 34 auf, die sich vom Werkstückträger 30 in Richtung des ersten Bauteils 2 erstrecken. An den Linearführungen 34 ist der Aufnahmeträger 31 vertikal bewegbar (Bewegung v) mit dem Werkstückträger 30 verbunden. Die Bewegung v des Aufnahmeträgers 31 relativ zu den Fließdüsen 23 wird zum einen durch den Staudruck bestimmt, den das ausfließende Composit 4 auf den Aufnahmeträger 31 ausübt, andererseits durch eine Gegenkraft G gegen den Staudruck. Die Gegenkraft G wird durch eine Proportionalpneumatik 35 ("Luftfeder") des zweiten Bauteils 3 erzeugt. Die Proportionalpneumatik 35 ist mit dem Werkstückträger 30 verbunden und zwischen dem Werkstückträger 30 und dem Aufnahmeträger 31 angeordnet.

Außerdem weist das zweite Bauteil 3 eine Messvorrichtung 36 auf, die durch einen Messwertaufnehmer 360 und eine Messskala 361 symbolisch dargestellt ist. Die Messvorrichtung 36 misst den Weg, den der Aufnahmeträger 31, ausgehend von einer Ausgangsposition, die zu Beginn des Befüllens eingenommen wird, zurückgelegt hat. Erfindungsgemäß wird die Proportionalpneumatik 35 so gesteuert, das abhängig von dem von der Messvorrichtung 36 ermittelten Weg eine definierte Gegenkraft G gegen die durch den Staudruck erzeugte Bewegung des Aufnahmeträgers 31 ausgeübt wird. Der maximale Weg, den der Aufnahmeträger 31 von seiner Ausgangsposition bis zur Endposition, in der die Kapseln 5 befüllt sind, zurücklegt, ist vordefiniert. Somit ist auch das Füllvolumen festgelegt. Die (Momentan-)Geschwindigkeit v des Aufnahmeträgers 31 wird durch den Staudruck und die von der Proportionalpneumatik ausgeübte Gegenkraft 35 bestimmt. Der Staudruck wiederum hängt vom Fließverhalten des Composits 4 ab.

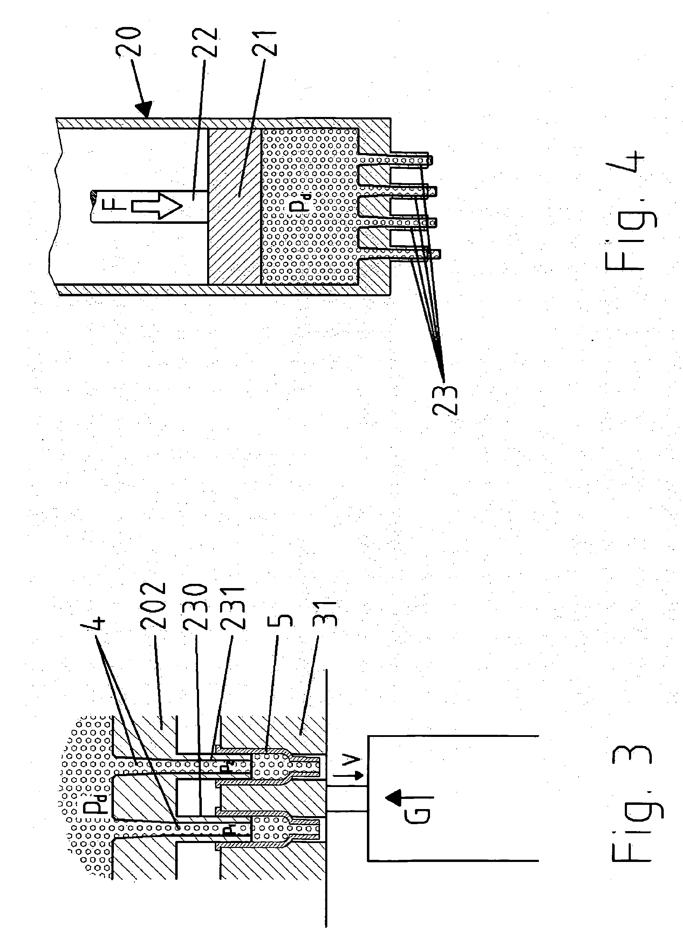

Die Figur 3 zeigt weitere Details der erfindungsgemäßen Vorrichtung. Im Behälterbereich oberhalb der Fließdüsen 23 wird durch die Kraft F ein Dosierdruck p_{d} erzeugt. In den beiden beispielhaft dargestellten Fülldüsen 230 und 231 herrschen unterschiedliche Drücke p₁ bzw. p₂. Durch diese Drücke wird in den Kapseln 5 ein Staudruck erzeugt, der den Aufnahmeträger 31 nach unten schiebt, symbolisiert durch den Pfeil v. Die durch die Proportionalpneumatik 35 mit Kraft-/Wegsteuerung erzeugte Gegenkraft G ist abhängig von der Füllstrecke bzw. dem von der Ausgangsposition ab zurückgelegten Weg des Aufnahmeträgers 31. Die Gegenkraft kann über den Füllweg variabel eingestellt werden. Sie ist während des Befüllens stets kleiner als die durch den Staudruck ausgeübte Kraft. Diese berechnet sich für die beiden dargestellten Düsen wie folgt: Fₛₜₐᵤ=p₁*A+p₂*A. Damit ist die Proportionalpneumatik 35 so ausgelegt, das sie während des Abfüllvorgangs eine Bewegung des Aufnahmeträgers 31 nur nach unten zulässt, jedoch in Abhängigkeit von der Wegstrecke unterschiedliche Gegenkraft G ausüben kann.

Wie in der Figur 4 ist dargestellt, wird das abzufüllende Material 4 aus dem Behälter 20 durch mehrere Düsen 23 mit konstantem Druck p_{d} ausgepresst, indem auf dem Kolben 21 eine Kraft F ausgeübt wird. Das Material 4 fließt auf Grund lokal unterschiedlicher Fließeigenschaften mit unterschiedlichen Geschwindigkeiten aus den Düsen 23. Auf diese Weise gibt sich ein Toleranzband hinsichtlich der Abfüllgenauigkeit bezüglich eines Sollwertes.

Im Stand der Technik wurde beim Abfüllen eine Zeit vorgegeben, in der das Material in die Kapseln fließt. In dieser Zeit werden die Düsen kontinuierlich aus den Kapseln herausgezogen. Das zur Verfügung gestellte Volumen und die Fließgeschwindigkeit des Materials müssen dabei stets in ein Gleichgewicht gebracht werden. Der Staudruck soll so groß sein, dass keine Lufteinschlüsse entstehen und so klein, das keine Überdosierung erfolgt. Da sich das Fließverhalten vieler abzufüllender Materialien in Behälter mit der Zeit stark verändert, ist es schwierig, Kalibrierzyklen richtig zu bestimmten, Mindestfüllgewichte ein zuhalten, Prozesse an zu fahren, Störungen zu beheben, etc. Bei Abweichungen erfolgt eine Nachregelung durch geschultes und erfahrenes Personal.

Die vorliegende Erfindung arbeitet dagegen mittels Volumenbestimmung (entsprechend der Wegmessung, multipliziert mit dem Füllquerschnitt). Durch das Aufbauen einer definierten Gegenkraft werden negative Effekte variabler Fließgeschwindigkeiten automatisch ausgeglichen. Verändert sich die Abfüllzeit aufeinander folgender Abfüllzyklen über einen Toleranz hinaus, werden Anlagenparameter verändert, um die Füllzeit in die Gegenrichtung nachzuregeln. Das Verfahren ist somit vollständig automatisierungsfähig.

Obwohl die vorliegende Erfindung anhand der beigefügten Ausführungsbeispiele detailliert beschrieben worden ist, ist für den Fachmann selbstverständlich, dass die Erfindung nicht auf diese Ausführungsformen beschränkt ist, sondern vielmehr Abwandlungen oder Änderungen gemäß der beigefügten Ansprüche umfasst, wobei die Änderungen durch unterschiedliche Kombinationen einzelner dargestellter Merkmale als auch durch Weglassen einzelner Merkmale erfolgen können. Insbesondere ist jegliche Kombination der dargestellten Merkmale von der Erfindung umfasst.

## Patentansprüche

1. Vorrichtung zum Abfüllen eines insbesondere hochviskosen Materials in Abfüllbehälter, umfassend:
Ein erstes Bauteil umfassend einen Materialbehälter mit wenigstens einer Ausbringdüse;
Ein zweites Bauteil umfassend wenigstens einen Träger zur Aufnahme der Abfüllbehälter, wobei Träger durch den vom Staudruck des Materials während des Abfüllens relativ zum ersten Bauteil bewegbar angeordnet ist; und
Mittel zum Ausüben einer definierten Gegenkraft zur durch den Staudruck verursachten Bewegung des Trägers
**dadurch gekennzeichnet, dass**
die Mittel zum Ausüben der Gegenkraft wenigstens eine Steuerung zur Steuerung der Gegenkraft in Abhängigkeit von wenigstens einem Parameter umfassen.

2. Vorrichtung nach Anspruch 1, **dadurch gekennzeichnet, dass** die Vorrichtung zwei oder mehrere Ausbringdüsen umfasst.

3. Vorrichtung nach einem der vorhergehenden Ansprüche, **dadurch gekennzeichnet, dass** die Mittel eine Vorrichtung zur Messung des vom Träger vom Beginn des Abfüllzyklus an zurückgelegten Wegs umfassen.

4. Vorrichtung nach einem der vorhergehenden Ansprüche, **dadurch gekennzeichnet, dass** die Mittel eine Proportionalpneumatik zur Einstellung der Gegenkraft aufweisen.

5. Vorrichtung nach einem der vorhergehenden Ansprüche, **dadurch gekennzeichnet, dass** die Vorrichtung eine Regelung aufweist, die den Ausbringdruck im Materialbehälter in Abhängigkeit von der Befüllzeit der Abfüllbehälter regelt.

6. Verfahren zum Abfüllen eines insbesondere hochviskosen Materials in Abfüllbehältern, umfassend die Schritte:
a) Ausüben eines Ausbringdrucks zum Ausbringen des Materials aus einem Materialbehälter in Abfüllbehälter; und
b) Bewegen der Abfüllbehälter durch den vom in die Abfüllbehälter einfließenden Material erzeugten Staudruck, wobei eine definierte Gegenkraft gegen die Bewegung der Abfüllbehälter, die durch den Staudruck bei der Befüllung der Abfüllbehälter entsteht, ausgeübt wird,
**dadurch gekennzeichnet, dass**
die Gegenkraft im Schritt b) in Abhängigkeit von einem Messparameter gesteuert bzw. geregelt wird.

7. Verfahren nach Anspruch 6, **dadurch gekennzeichnet, dass** das Material durch mehrere Ausbringdüsen parallel ausgebracht wird.

8. Verfahren nach einem der Ansprüche 6 bis 7, **dadurch gekennzeichnet**, die Gegenkraft im Schritt b) in Abhängigkeit vom während des Abfüllvorgangs von den Abfüllbehältern zurückgelegten Wegs gesteuert bzw. geregelt wird.

9. Verfahren nach einem der Ansprüche 6 bis 8, **dadurch gekennzeichnet, dass** der während des Abfüllvorgangs von den Abfüllbehältern zurückgelegte (maximale) Weg vorgegeben wird.

10. Verfahren nach einem der Ansprüche 6 bis 9, **dadurch gekennzeichnet, dass** die Geschwindigkeit der Abfüllbehälter während des Abfüllvorgangs durch den Staudruck und die ausgeübte Gegenkraft bestimmt wird.

11. Verfahren nach einem der Ansprüche 6 bis 10, **dadurch gekennzeichnet, dass** der Ausbringdruck in Abhängigkeit von der Ausbringzeit beim Befüllen der Abfüllbehälter zwischen unterschiedlichen Abfüllzyklen geregelt wird.

## Claims

1. Device for filling in particular a high-viscosity material into filling containers, comprising:
a first component comprising a material container with at least one dispensing nozzle;
a second component comprising at least one carrier for receiving the filling containers, wherein the carrier is movably arranged relative to the first component through the dynamic pressure of the material generated during dispensing; and
means for exerting a defined counterforce to the movement of the carrier caused by the dynamic pressure
**characterized in that**
the means for exerting the counterforce comprise at least one controller for open-loop control of the counterforce as a function of at least one parameter.

2. Device in accordance with claim 1, **characterized by** the fact that the device comprises two or more dispensing nozzles.

3. Device in accordance with any of the previous claims, **characterized by** the fact that the means comprise a device for measuring the path travelled by the carrier from the start of the fill cycle.

4. Device in accordance with any of the previous claims, **characterized by** the fact that the means have a proportional pneumatic unit for setting the counterforce.

5. Device in accordance with any of the previous claims **characterized by** the fact that the device has a closed-loop control that regulates the dispensing pressure in the material container as a function of the fill time of the filling containers.

6. Method for filling particularly a high-viscosity material into filling containers, comprising the steps:
a) exerting a dispensing pressure for purpose of dispensing the material from a material container into filling containers; and
b) moving of the filling containers under the dynamic pressure generated by the material flowing into the filling containers, wherein a defined counterforce is exerted against the movement of the filling containers, said movement being caused by the dynamic pressure during filling of the filling containers
**characterized in that**
the counterforce in step b) is open-loop or closed-loop controlled as a function of a measurement parameter.

7. Method in accordance with claim 6, **characterized by** the fact that the material is dispensed through several dispensing nozzles in parallel.

8. Method in accordance with claim 6 to 7, **characterized by** the fact that the counterforce in step b) is open-loop or closed-loop controlled as a function of the path travelled by the filling containers during the filling process.

9. Method in accordance with any of claims 6 to 8, **characterized by** the fact that the (maximum) path travelled by the filling containers during the filling process is pre-set.

10. Method in accordance with any of claims 6 to 9, **characterized by** the fact that the speed of the filling containers during the filling process is determined by the dynamic pressure and the exerted counterforce.

11. Method in accordance with any of claims 6 to 10, **characterized by** the fact that the dispensing pressure is closed-loop controlled as a function of the dispensing time during filling of the filling containers between two different fill cycles.

## Revendications

1. Dispositif pour le remplissage de matériaux à haute viscosité dans des récipients de remplissage comprenant :
un premier composant comprenant un réservoir de matériau avec au moins une tuyère de déversement,
un second composant comprenant au moins un support pour recevoir les récipients de remplissage, le support étant placé mobile par rapport au premier composant par la pression de retenue du matériau pendant le remplissage et des moyens pour exercer une force antagoniste définie pour le mouvement du support provoqué par la pression de retenue,
**caractérisé en ce que**
les moyens pour exercer la force antagoniste comprennent au moins une commande pour la commande de la force antagoniste en fonction d'au moins un paramètre.

2. Dispositif selon la revendication 1, **caractérisé en ce que** le dispositif comprend deux ou plusieurs tuyères de déversement.

3. Dispositif selon l'une des revendications précédentes, **caractérisé en ce que** les moyens comprennent un dispositif pour la mesure du trajet parcouru par le support à partir du début du cycle de remplissage.

4. Dispositif selon l'une des revendications précédentes, **caractérisé en ce que** les moyens présentent un système pneumatique proportionnel pour le réglage de la force antagoniste.

5. Dispositif selon l'une des revendications précédentes, **caractérisé en ce que** le dispositif présente un réglage qui règle la pression de déversement dans le réservoir de matériau en fonction du temps de remplissage des récipients de remplissage.

6. Procédé pour remplir en paiticulier un matériau à haute viscosité dans des récipients de remplissage comprenant les étapes :
a) exercice d'une pression de déversement pour déverser le matériau d'un réservoir de matériau dans des récipients de remplissage et
b) déplacement des récipients de remplissage par la pression de retenue produite par le matériau qui entre en coulant dans les récipients de remplissage, une force antagoniste définie qui se forme par la pression de retenue lors du remplissage des récipients de remplissage étant exercée à l'encontre du déplacement des récipients de remplissage,
**caractérisé en ce que** la force antagoniste de l'étape b) est commandée ou réglée en fonction d'un paramètre de mesure.

7. Procédé selon la revendication 6, **caractérisé en ce que** le matériau se déverse parallèlement par plusieurs tuyères de déversement.

8. Procédé selon l'une des revendications 6 à 7, **caractérisé en ce que** la force antagoniste de l'étape b) est commandée ou réglée en fonction du trajet parcouru par les récipients de remplissage pendant le processus de remplissage.

9. Procédé selon l'une des revendications 6 à 8, **caractérisé en ce que** le trajet (maximal) qui est parcouru par les récipients de remplissage pendant le processus de remplissage est prédéfini.

10. Procédé selon l'une des revendications 6 à 9, **caractérisé en ce que** la vitesse des récipients de remplissage est définie pendant le processus de remplissage par la pression de retenue et la force antagoniste exercée.

11. Procédé selon l'une des revendications 6 à 10, **caractérisé en ce que** la pression de déversement est réglée en fonction de la durée de déversement lors du remplissage des récipients de remplissage entre différents cycles de remplissage.
